# EUROPEAN PATENT SPECIFICATION

(11) **EP 1 654 636 B1**
(45) Date of publication and mention of the grant of the patent: **19.03.2008**
(21) Application number: 04778726.2
(22) Date of filing: 21.07.2004
(51) Int. Cl.: G06F 9/44, G11B 19/00, G06F 17/30

(54) **A SYSTEM AND A METHOD FOR DISTINGUISHING BETWEEN DATA AND PRINT FILES IN AN ARCHIVED FILE**
SYSTEM UND VERFAHREN ZUM UNTERSCHEIDEN ZWISCHEN DATEN UND DRUCKDATEIEN IN EINER ARCHIVIERTEN DATEI
SYSTEME ET PROCEDE VISANT A FAIRE UNE DISTINCTION ENTRE DES FICHIERS DE DONNEES ET DES FICHIERS D'IMPRESSIONS DANS UN FICHIER ARCHIVE

(30) Priority: 28.07.2003 US 628902
(43) Date of publication of application: 10.05.2006
(73) Proprietor: Hewlett-Packard Development Company, L.P., Houston, TX 77070 (US)
(72) Inventor: PETTIGREW, David, Corvallis, OR 97330 (US)
(74) Representative: Lawman, Matthew John Mitchell
(86) International application number: PCT/US2004/023353
(87) International publication number: WO 2005/013122

(56) References cited:
- EP-A- 1 239 384

## Description

### BACKGROUND

Optical discs have fast become an industry standard for data storage in the fields of computers, video, and music. Optical discs include, but are not limited to, compact discs (CDs), digital video (or versatile) discs (DVDs), and game system discs in a variety of formats. Commercially produced optical discs typically have digital data recorded on one side of the disc and a visual display, or a label printed on the other side of the disc.

Some optical discs have been created that can store data on both sides of the disc. However, in many cases it is desirable to limit the optical disc data to a single side of the disc, leaving the other side of the disc for printed text, patterns, or graphics. The printed labeling on a non-data side of an optical disc can include a decorative design, text identifying the data stored on the disc, or both.

As optical technology has advanced, writeable and re-writable optical discs as well as equipment for writing onto the discs have become reasonably priced within the grasp of ordinary consumers. Thus, many consumers currently have the ability to burn data onto optical discs with home or office computers that have optical disc drives. For example, consumers may, in some instances, purchase CD or DVD data from a website on the Internet and burn the data onto their own CD or DVD.

Many consumers also desire to print labels, lyric sheets, user manuals, case inserts, case covers, and/or other printed content associated with the content they burn to optical discs. There are a number of printing devices currently available to consumers. For example, some disc drives are capable of printing a label directly onto an optical disc by applying a laser to the disk in certain patterns thereby altering the disc's optical properties. Additional printing devices that may be used to print the printed content include "direct on disc" printers and traditional inkjet and laser printers.

When storing data to an optical disk, data is often compressed into a single compressed archive file before being transmitted to a computer or other device containing the optical disc drive that will burn the data onto the optical disc. Additional files containing content that is to be printed instead of burned onto the optical disc is often included in the archived file. After receiving the archived file, an application on the computer must decompress and extract the data before the data is burned to the optical disc. However, in many instances, it is difficult or impossible for an application to distinguish between files in the archived file that contain data that is to be burned and files that contain content that is to be printed.

### SUMMARY

A method of creating an archived file in a manner that allows an application to distinguish between one or more data files and one or more print files in the archived file includes generating a manifest file and including the manifest file in the archived file. The manifest file indicates to the application a file location within the archived file associated with the one or more data files and with the one or more print files. EP-A-1239384 discloses a prior art system and method for managing archive files.

### BRIEF DESCRIPTION OF THE DRAWINGS

The accompanying drawings illustrate various embodiments of the present system and method and are a part of the specification. The illustrated embodiments are merely examples of the present system and method and do not limit the scope thereof.

Fig. 1 shows an optical disc that has a label on one if its sides according to one exemplary embodiment.

Fig. 2 is a flowchart illustrating a process whereby data files and print files are archived and then used to burn data onto an optical disc and to print content corresponding to the optical disc according to one exemplary embodiment.

Fig. 3 is a representation of a manifest file according to one exemplary embodiment.

Fig. 4 shows a file structure of an archived file containing data files and print files according to one exemplary embodiment.

Fig. 5 shows an additional file structure of an archived file containing a print file and a disk image file according to one exemplary embodiment.

Fig. 6 illustrates an enforced file structure according to one exemplary embodiment.

Fig. 7 shows a system configured to receive an archived file, extract its contents, burn data into an optical disc, and print content for the optical disc according to one exemplary embodiment.

Throughout the drawings, identical reference numbers designate similar, but not necessarily identical, elements.

### DETAILED DESCRIPTION

The present specification describes a system and a method for archiving one or more print files with data files in a manner that allows a subsequent application to extract the files and distinguish between the print files and the data files. The method allows the extracting application to handle both the data burning and the content printing in a single process without the need to manually distinguish the data files that are to be burned from the print files that are to be used in the printing of content.

As used in this specification and the appended claims, the term "optical disc" is used broadly to encompass discs for recording music, pictures, video, video games, and/or software, etc. An optical disc includes, but is in no way limited to, writable and rewritable storage devices including, but not limited to, Compact Discs (CDs), Compact Disc Read-Only Memory (CD-ROMs), Minidiscs, Digital Video (or Versatile) Discs (DVDs) in various formats, and video game discs in various formats.

"Printed content" or "content" is meant to be understood as any label, case insert, case cover, lyric sheet, user manual, or other content associated with an optical disc that is printed. As used in this specification and in the appended claims, unless otherwise specifically denoted, "print file" will be used to refer to any file that is used by an application to print content associated with an optical disc.

A common example of printed content is a label. "Label" means any text, printed pattern, graphical design, or combination thereof on an object such as an optical disc. If a label is added to an optical disc, the label is typically, though not necessarily, found on one side of the optical disc. It is also possible to have a label on both sides of an optical disc. "Printed pattern" means any text, letters, words, symbols, or characters that are found on an object as part of a label for that object. "Graphical design" means any graphic or image that is found on an object as part of a label for that object. Furthermore, as used in this specification and in the appended claims, the term "label file" will refer to a specific print file that is used to generate a label for an optical disc.

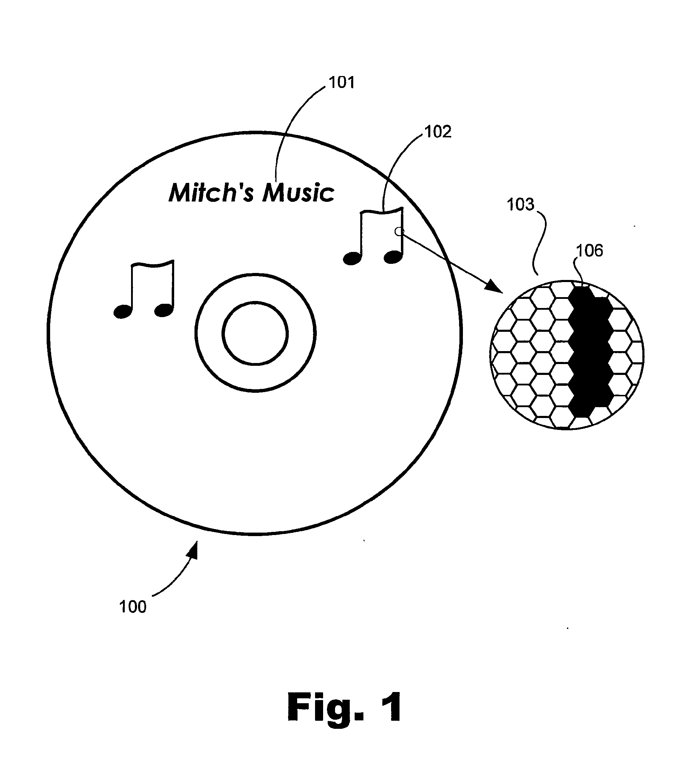

Fig. 1 shows an example of an optical disc (100) that has a label on one of its two sides, according to an exemplary embodiment. As shown in Fig. 1, the optical disc (100) may have a label comprising a printed pattern (101) and a graphical design (102). An inset (103) shows that individual pixels (106) of the optical disc (100) have been selectively colored by a printing mechanism to form the graphical design (102).

As mentioned above, there are a number of devices that may be employed to print the label on an optical disc. One such device is an optical disc drive that applies a laser to the optical disc in selective patterns. According to one exemplary embodiment, the laser may be the same laser that burns the data onto the optical disc. The application of the laser to the optical disk changes the optical properties of the exposed portions of the optical disc resulting in visibly distinguishable patterns. Commercially available products that may be used to label optical discs using a laser include, but are in no way limited to, optical disc drives such as CD Read/Write (RW), CD record (CD-R), DVD-R, or DVD-RW. Similarly, other products capable of writing to optical discs may be used including, but not limited to, iarge scaie optical disc recorders that are used for mass production of labeled and recorded optical discs. A more detailed explanation of the method of labeling the optical disc with a laser is beyond the scope of the present specification and will not be provided herein.

A "direct on disc" printer may also be used to print a label onto the optical disc (100). A "direct on disc" printer may be an inkjet or other type of printer that is configured to selectively deposit ink directly onto the surface of the optical disc. In an alternative embodiment, a printer may be used to print a desired label onto paper with an adhesive element attached such that the label may subsequently be attached to the optical disc.

The label illustrated in Fig. 1 is only one example of many types of printed content that may be associated with an optical disc. For ease of explanation only, the following explanation will, be described in the context of forming a label on an optical disk. However, it will be understood that other printed content associated with an optical disc, as described above, may be printed by a printer as prescribed by one or more print files according to the present system and method.

According to one exemplary embodiment, data that is to be burned onto an optical disc may vary in type. For example, the data to be burned onto a disk may be a disk image file. A disk image file (also referred to as a disk image) is an exact binary copy of an entire disk. This copied disk is also referred to as a "source disk," because it is the source of the disk image file. According to one exemplary embodiment, the source disk may be an optical disc, a hard drive, a floppy disk, or some other type of medium for storing electronic data. Disk image files contain all the data stored on the source disk including not only its files and folders but also its boot sectors, file allocation tables, volume attributes, and any other system-specific data. An image of a disk can be created even if the disk is written in an unknown format or even under an unknown operating system because disk images contain raw disk data. For this reason, disk images are widely used by optical disc recording software for transferring and storing complete optical disc contents.

Disk image files may have different file formats depending on the disk type of the source disk. For example, CD and DVD image files may be in ISO 9660 file format. ISO stands for International Organization for Standardization and is a standard that has been developed for CD data. The CD and DVD image files may also be in ISO-Joliet format. ISO-Joliet file format is an extension of the ISO 9660 file format. Conversely, hard drive and floppy disk image files may be in IMG, IMA, or XDF file format, as will be understood by one skilled in the art. Accordingly, files of any file format may be archived according to the present system and method.

Other types of data that may be burned onto an optical disc include individual audio, video, game, and other data files. For example, the files may be Moving Picture Experts Group Layer-3 (MP3) audio files or DivX video files. Examples of game files include, but are not limited to, Sony^{™} Playstation^{™} , Nintendo^{™} Gamecube^{™}, and Microsoft^{™} X-boX^{™} files. According to one exemplary embodiment, any data file may be burned onto an optical disc.

Similarly, a print file may vary in type. For example, a print file may be, but is in no way limited to, an image file in bitmap (BMP) format, Joint Photographic Experts Group (JPEG) format, Graphic Interchange Format (GIF), a text file, or any other type of graphics file. It will also be understood that there may be more than one print file in some applications.

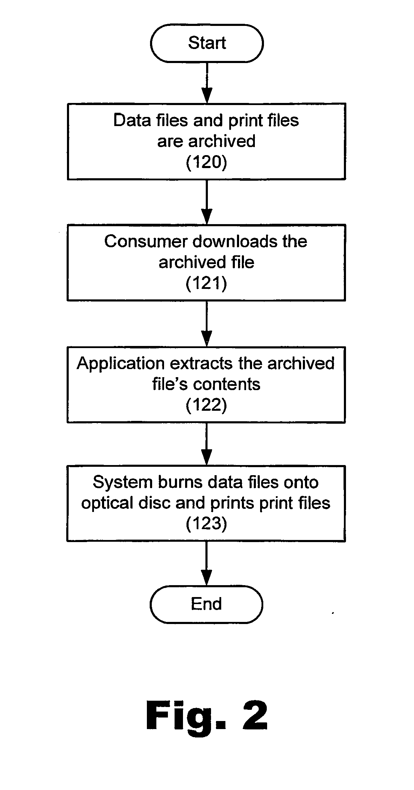

An exemplary process wherein data files and print files are archived and subsequently used to burn data onto an optical disc and print content corresponding to the optical disc is illustrated in the flow chart of Fig. 2. The steps of Fig. 2 are exemplary only and may be modified or re-ordered as best serves a particular application. As shown in Fig. 2, the data and print files are first archived into a single archive file (step 120). Exemplary methods of archiving the files will be explained in detail further below. The archiving of the data and print files may be performed, for example, by a stand-alone software utility on a personal computer, server, or any other device configured with the software utility. The archived file may reside on a web server; on an intra-company data server; on a personal computer in a home, a school, or an office; or on any other device capable of storing the archived file.

The archived file may be compressed using a compression algorithm such as the ZiP compression algorithm. Any compression utility or algorithm may be used, according to an exemplary embodiment. A compressed archived file may take less space and is often easier to transmit over a network. However, it may not be necessary to compress the archived file in some instances. In these instances, compression is not performed.

The archived file may be given a unique extension so that the archived file may be easily recognized by a computer system. For example, the extension could be *.dar or *.zip, where * is a descriptive name, such as "disc_contents." Any unique recognizable extension may be given to the archived file.

Once the data and print files have been archived, a consumer may download the archived file (step 121). A number of scenarios exist wherein a consumer may want to download an archived file to burn onto an optical disc such as when accessing a web-site that allows a consumer to download the complete contents of a CD or DVD. The complete contents of the CD or DVD may include both audio data files as well as print files containing a label image, a lyric sheet, and/or a case cover image. The consumer may download the archived file to a personal computer or to any other device or system that is configured to burn data into an optical disc. As used herein and in the appended claims, unless otherwise specifically denoted, the term "system" will be used to refer to any system, personal computer, personal digital assistant (PDA), or other computing device having an application configured to burn data into an optical disc. The system may also be configured to print the content corresponding to optical discs. However, in an alternative embodiment, a separate printer that prints the content of the print files may be coupled to the system.

The archived file may be downloaded by the consumer over the Internet or some other type of network such as a wide area network (WAN) or a local access network (LAN) according to one exemplary embodiment. In an alternative embodiment, the archived file may be transmitted to the consumer in some other form. For example, the archived file may be copied to a floppy disc or an optical disc and then manually loaded onto the consumer's system that is being used to burn and label the optical disc.

Once the consumer has downloaded the archived file to the system, an application on the system extracts the data and print files from the archived file (step 122). The extraction process will be explained in more detail further below. According to one exemplary embodiment, the application may be a program or utility that runs on the system configured to recognize an archived file and extract its contents.

Once the data and print files have been extracted from the archived file, the system burns the data files onto the optical disc and prints the content according to the print files' contents (step 123). In an alternative embodiment, the system burns the data files onto the optical disc and then causes an attached printer to print the content according to the print file's contents.

Exemplary methods for generating an archived file in a way that allows a system to automatically distinguish between the data files and the print files will now be explained. It will be understood that the archiving methods described herein are merely examples of many archiving methods that may be used to allow a system to automatically distinguish between data and print files and are in no way limiting the present system and method to the methods described.

According to one exemplary embodiment, a "manifest" file is generated and included with the data and print files in the archived file. A manifest file is a type of metadata (i.e.; data that describes other data) that assigns the data and the print file identifiable locations within the archived file. In other words, the manifest file provides the data and print file paths along with their format information. An application may use the information given in the manifest file to automatically determine which files are data files and which files are print files. The manifest file will now be explained in more detail.

The manifest file may be generated using any of a number of programming languages or syntaxes. An exemplary language is Extensible Markup Language (XML). XML is a World Wide Web Consortium standard that lets users create their own tags. XML allows the manifest to be easily adapted to different applications. However, XML is exemplary in nature only, and not limiting. Other languages such as Hyper Text Markup Language (HTML), Java, and others may be used instead of XML to generate the manifest file.

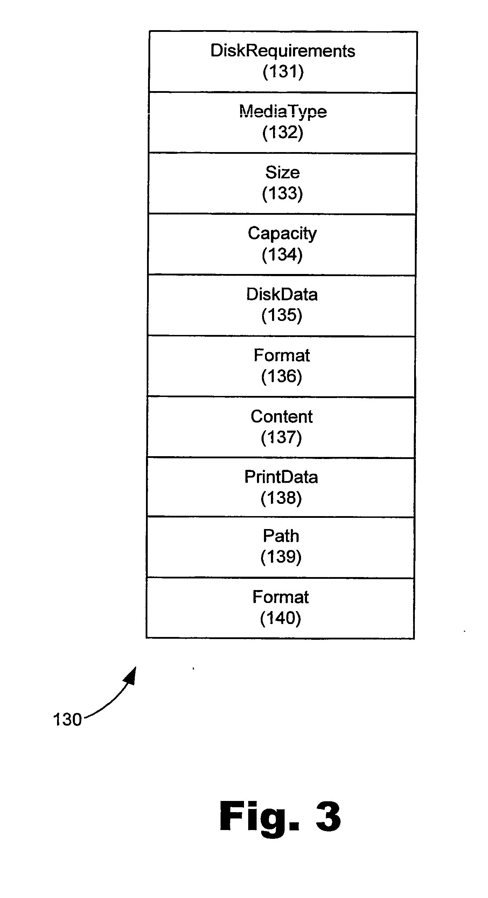

Exemplary elements of a manifest file will now be given with reference to Fig. 3. It will be recognized by one of ordinary skill in the art that these elements are exemplary in nature only and are not limiting. They may be modified, renamed, added to, or taken away from as best serves a particular application.

Fig. 3 is a representation of a manifest file (130) with a number of elements (131-140). The elements (131-140) represent various descriptor terms that, when combined with file-specific information, allow an application to determine the type and quantity of contents of the archived file with which the manifest file (130) is associated.

As shown in Fig. 3, one of the exemplary elements is labeled "DiskRequirements" (131). This element holds information about the minimum optical disc media requirements for the associated archive file. The information is typically determined automatically when the archive file is created.

Another exemplary element shown in Fig. 3 is "MediaType" (132). This element specifies the type of optical disc for which the archive is intended. For example, the element could specify that the optical disc is to be a CD, DVD, video game disk, etc.

Another exemplary element is "Size" (133). This element specifies the physical diameter of the optical disc that is to be used. This information may be used in the labeling process.

Another exemplary element is "Capacity" (134). This element specifies the required capacity of the optical disc to store the files that are in the archived file.

Another exemplary element is "DiskData" (135). This element is a holder for information about the data file or files to be burned onto the optical disc.

Another exemplary element of the manifest file (130) is "Format" (136). This element specifies the format of the data. This element is used to signal whether the data format complies with any standard format.

Another exemplary element is "Content" (137). The "content" element (137) specifies a data content item. According to one exemplary embodiment, the content element may be a file name. There may be many data file names or just a single file name, depending on the particular application.

Another exemplary element is "PrintData" (138). The "print data" element (138) is a holder for the information about the print files associated with the optical disc that may be printed. The print file may be a bitmap file, a text file, or some other binary graphics or text file.

Another exemplary element is "Path" (139). The "path" element (139) specifies the path to a particular print file that will be printed. The "path" element (139) includes the directory path and filename, according to one exemplary embodiment.

Another exemplary element is "Format" (140). The "format" element (140) specifies the format of a particular print file in case the format is not obvious from the file name and extension.

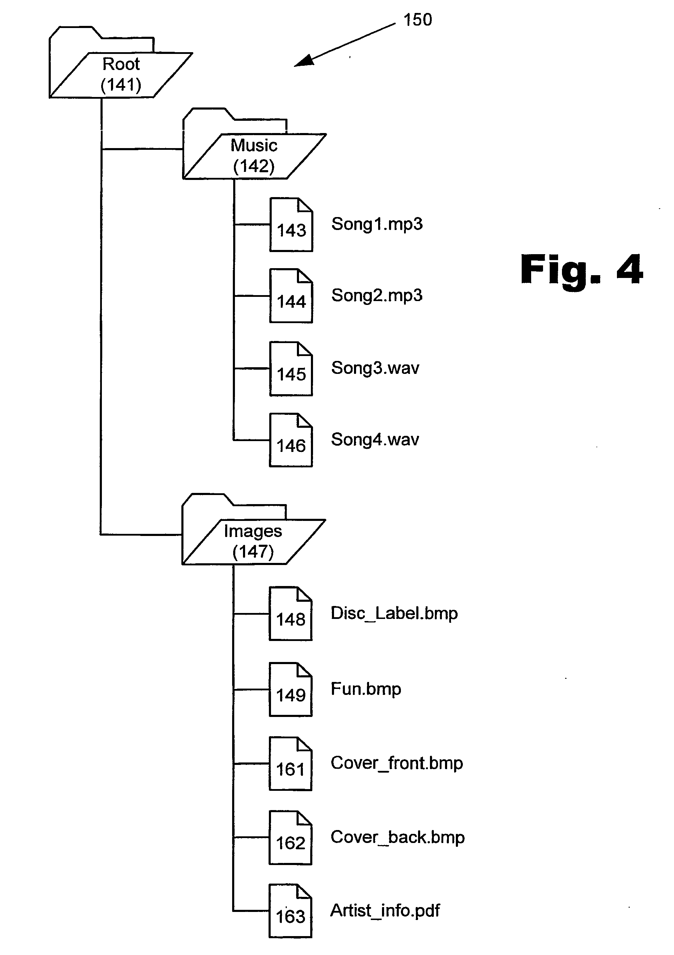

An example of a manifest file will now be given in connection with Fig. 4. Fig. 4 shows an exemplary file structure of an archived file (150) containing data files (143-146, 149) and print files (148, 161-163). As shown in Fig. 4, the archived file (150) may include various directories or folders (141, 142, 147). Files of various types may be in each of these directories or folders (141, 142, 147). For example, in the exemplary archived file (150) of Fig. 4, there are MP3 data files (143, 144) and WAV data files (145, 146) in the "music" directory (142). According to one exemplary embodiment, there may be data files in one or more directories, including the root directory (141). For example, in the "images" directory (147), "fun.bmp" (149) is a data file even though the file is a bitmap file.

Similarly, according to one exemplary embodiment, print files may be in any of the directories of the archived file (150). For example, the file "Disc_label.bmp" (148) is a label file located in the "images" directory (147). The files "Cover_front.bmp" (161) and "Cover_back.bmp" (162) are print files corresponding to a case cover for an optical disc. These case cover files (162, 163) are also found in the "images" directory (147). The file "Artist_info.pdf' (163) is a print file corresponding to an insert for an optical disc that is also found in the "images" directory.

Often it is difficult to distinguish the print files from the data files in the archived file (150). For example, the file "fun.bmp" (149) in Fig. 4 is a data file that is to be burned onto an optical disc. Without a method of distinguishing a print file from a data file, it would be difficult or impossible for the system or user to distinguish between "fun.bmp" (149) and the other image files that constitute print files.

The file structure of Fig. 4 is given for illustrative purposes only and is only an example of many different possible file structures of the archived file (150). As will be understood by one skilled in the art, the name and quantity of the directories may vary in accordance with the contents of the archived file. According to one exemplary embodiment, the manifest file allows an application on a system to quickly locate and distinguish print files from data files. Elements of an exemplary manifest file corresponding to the archive file (150) illustrated in Fig. 4 will now be given.

Table 1 below illustrates some exemplary elements of a manifest file corresponding to the archive file (150) of Fig. 4. The following sample code is given for illustrative purposes only, and may be modified in syntax and/or content, as will be understood by one skilled in the art. The exemplary sample code below is in XML. An explanation of the code will be given after the code is presented.

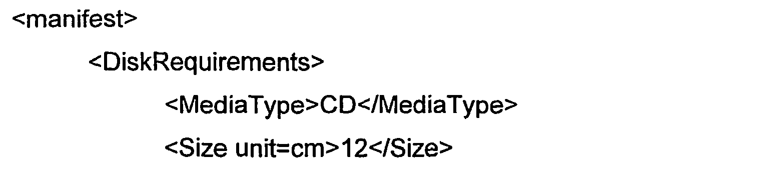

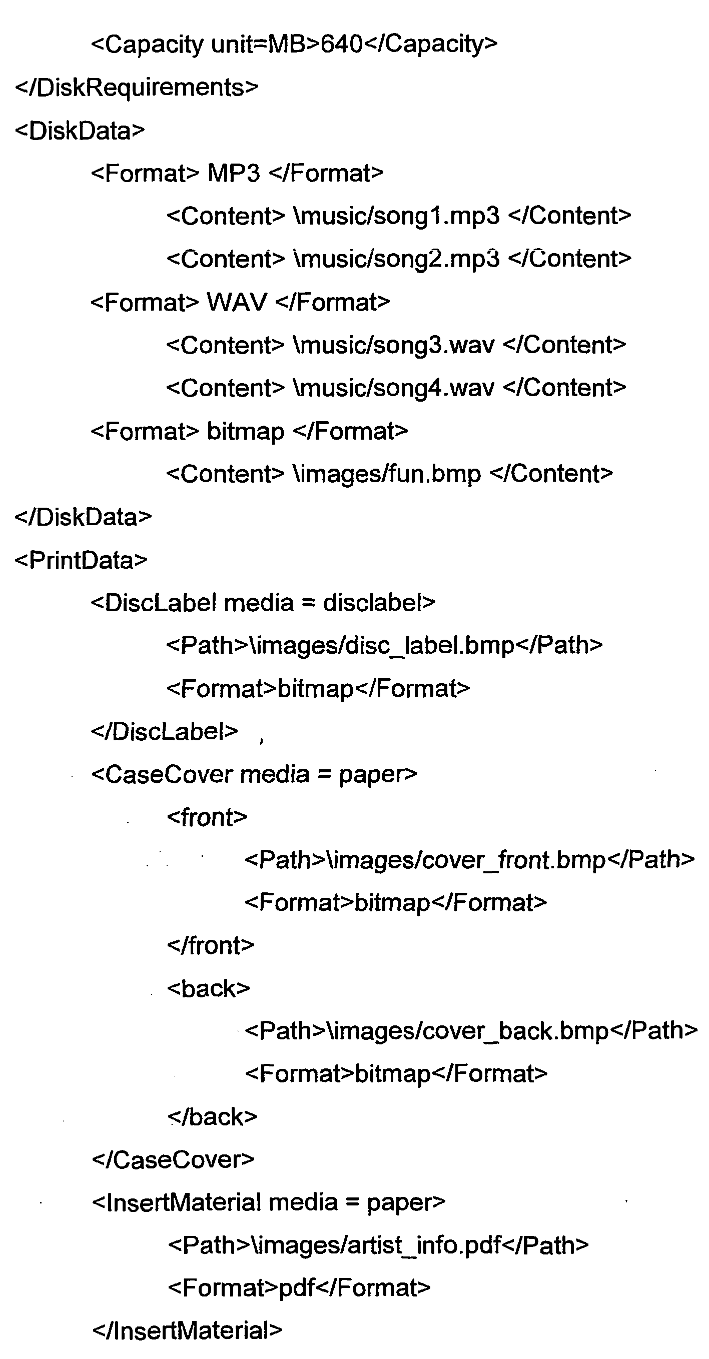

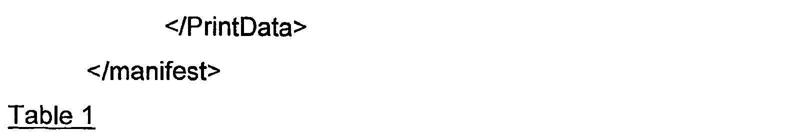

The portion of the manifest file illustrated above in Table 1 shows that the data files are in MP3, WAV, and bitmap formats. The manifest file also illustrates the paths of the data files. Additionally, the manifest file shows that the archive file needs a 12 centimeter 640 megabyte (MB) CD in order to burn the files and label the CD. The manifest file also shows that the archived file contains four print files. The first is a label file called "Disc_label.bmp" and is located in the "Images" directory. The second and third print files are print files corresponding to the case cover for the CD and are called "cover_front.bmp" and "cover_back.bmp." The fourth print file is a print file corresponding to a case insert for the CD and is called "artist_info.pdf." Thus; by including the manifest file in the archived file, an application accessing the archived file can automatically determine which files in the archived file are the print files as well as their paths. Similarly, by including the manifest file in the archived file, the application can determine which files in the archived file are data files as well as their paths.

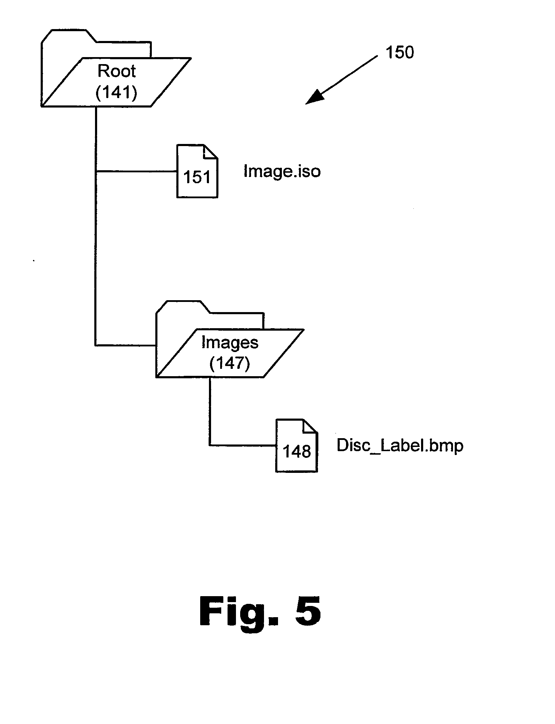

Fig. 5 is another exemplary file structure of an archived file (150). In this exemplary archived file (150), a disk image file (151) is in the root directory (141). The disk image file (151) is called "image.iso". There is one print file in the exemplary file structure of Fig. 5. This print file is a label file found in the "images" directory (147) and is called "Disc_label.bmp". Some of the elements of an exemplary manifest file corresponding to the archive file (150) of Fig. 5 will now be given.

Table 2 below illustrates some exemplary elements of an exemplary manifest file corresponding to the archive file (150) of Fig. 5. The following sample code is given for illustrative purposes only, and may be modified in syntax and/or content, as will be understood by one skilled in the art. The exemplary sample code below is in XML. An explanation of the code will be given after the code is presented.

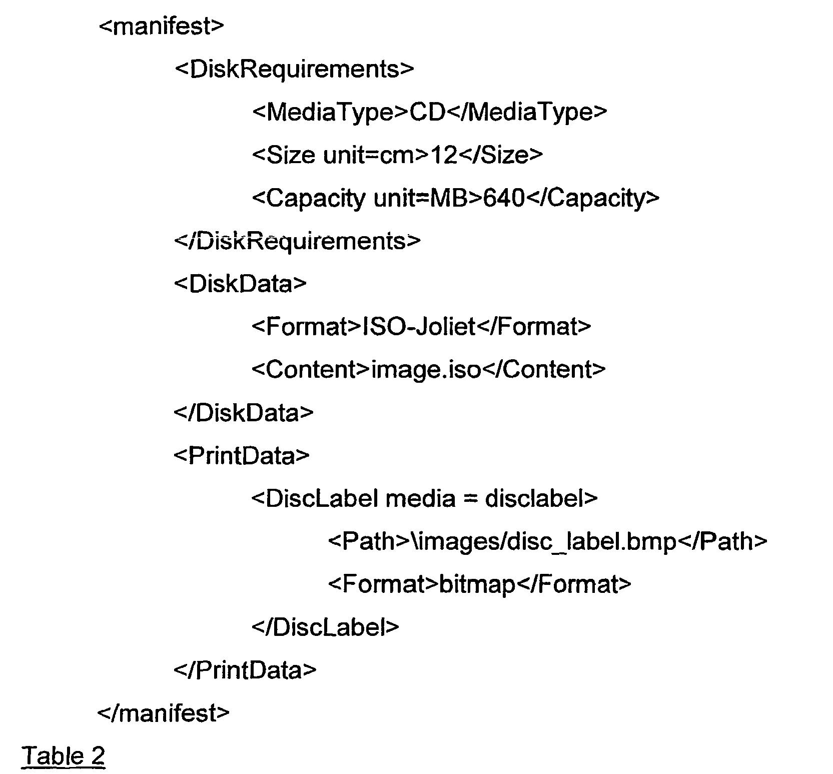

The portion of the manifest file illustrated in Table 2 shows that the data file is in ISO-Joliet file format and located in the root directory. The manifest file also shows that the archive file requires a 12 centimeter 640 megabyte (MB) CD in order to burn the files and label the CD. Additionally, the manifest file shows that the label graphic is a bitmap file called "Disc_label.bmp" located in the "Images" directory. Thus, by including the manifest file in the archived file, an application on a system can automatically determine that the label file is "Disc_label.bmp" located in the "Images" directory. Moreover, by including the manifest file in the archived file, the application can determine which files in the archived file are data files.

The manifest file's name may vary as best serves a particular application. For example, the manifest file may be named "manifest.xml" or some other name. According to one exemplary embodiment, the name of the manifest file is recognizable by the application that is to extract the files from the archived file.

The manifest file's location in the archived file may also vary as best serves a particular application. According to one exemplary embodiment, the manifest file is located in the root directory of the archived file so that the application knows where to locate it. According to an alternative embodiment, the manifest file may be located in any directory within the archived file. For example, in the exemplary file structure of Fig. 4, the manifest file may be located in either the "Music" directory (142) or in the "Images" directory (147). If the manifest file is located in a directory other than the root directory, a "boot" file in the root directory may be used to point to the location of the manifest file. By using a boot file to point to the manifest file's location, an application can locate the manifest file stored anywhere with any name. The use of a boot file is optional in the present system and method. For example, rather than using a boot file to point to the manifest file's location, the manifest file may be given a specific name that applications recognize as belonging to only a manifest file.

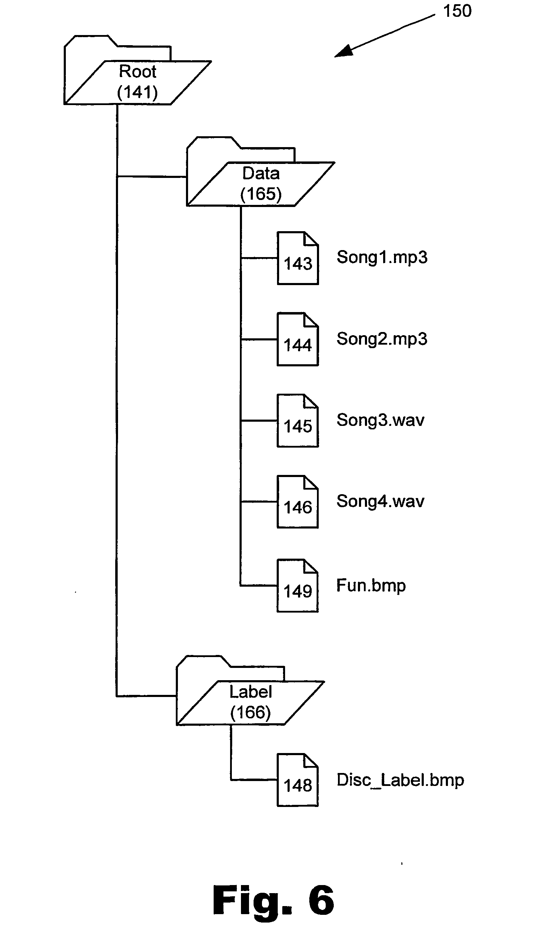

An alternative method for generating an archived file in a way that allows a system to automatically distinguish between data files and print files will be explained with reference to Fig. 6. According to an exemplary embodiment illustrated in Fig. 6, an enforced directory structure is used in the archived file so that an application automatically knows where data and print files are located.

As shown in Fig. 6, the archived file (150) has two directories (165, 166) underneath the root directory (141). According to one exemplary embodiment, all the data files (143-146, 149) are located within one directory that an application can recognize. For example, all the data files (143-146, 149) are in a directory called "Data" (165). Thus, "fun.bmp" (149), which is a data file in the example of Fig. 6, is included in the "Data" (165) directory. Furthermore, the print file (148) is in its own directory. In the example illustrated in Fig. 6, the print file is a label file named "Disc_label.bmp" (148) located in a directory called "Label" (166).

By forcing the data files to be in one or more directories designated as containing only data files and by forcing print files to be in one or more directories designated as containing only print files, an application can automatically locate and distinguish a print file from data files that are to be burned onto the optical disc by their location.

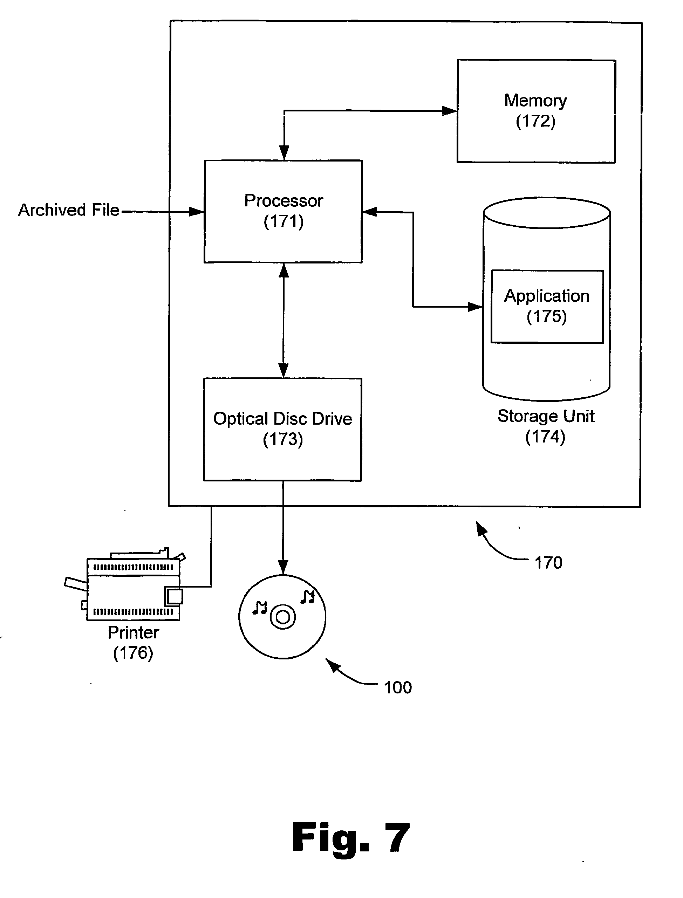

Fig. 7 shows an exemplary system for receiving an archived file, extracting its contents, burning data into an optical disc, and printing content for the optical disc. The system shown in Fig. 7 is merely exemplary and may be modified as best serves a particular application.

As shown in Fig. 7, the system (170) includes a processor (171) communicatively coupled to a memory unit (172), an optical disc drive (173), and a storage unit (174). The storage unit may be a hard drive, for example, containing an application (175) that may be executed by the processor (171) to extract data and print files from an archived file and cause the optical disc drive (173) to burn the data onto the optical disc (100). The application may also cause the optical disc drive (173) or an attached printer (176) to print content for the optical disc (100) based on one or more print files in the archived file.

As shown in Fig. 7, the system (170) receives an archived file containing data files and one or more print files. The system (170) may receive the archived file by downloading the archived file from the Internet or by some other method as previously described. When the archived file is received, the processor (171) runs the application (175) that is configured to extract the contents of the archived file. The application (175) is not necessarily resident on the storage unit (174). According to one alternative embodiment, the application (175) may be resident on an optical disc such as a CD or the application (175) may be temporarily resident in the system's memory (172).

If the archived file is compressed, the application (175) decompresses the archived file, according to an exemplary embodiment. The application (175) then extracts the data files and the print files in accordance with the principles already explained above. The data files may then be burned by the optical disc drive (173) into the optical disc (100) and the print files may be used to print a label, case cover, case insert, or some other content associated with the optical disc (100). The printing may be performed with the optical disc drive (173) or with the attached printer (176).

The preceding description has been presented only to illustrate and describe embodiments of invention. It is not intended to be exhaustive or to limit the invention to any precise form disclosed. Many modifications and variations are possible in light of the above teaching. It is intended that the scope of the invention be defined by the following claims.

## Claims

1. A method of creating an archived file (150) in a manner that allows an application (175) to distinguish between one or more data files (143-146, 149), to be burned onto an optical disc (100), and one or more print files (148, 161-163), comprising content to be printed, in said archived file (150) comprising
generating a manifest file (130); and
including said manifest file (150) in said archived file (150);
wherein said manifest file (130) indicates to said application (175) a file location within said archived file (150) associated with said one or more data files (143-146, 149) and a file location associated with said one or more print files (148, 161-163).

2. The method of claim 1, further comprising:
extracting files from said archived file (150) with said application (175), said files including said one or more data files (143-146, 149), said one or more print files (148, 161-163), and said manifest file (150);
burning said one or more data files (143-146, 149) onto an optical disc (100); and
printing content corresponding to said one or more print files (148, 161-163).

3. The method of claim 2, wherein said generation of said manifest file (150) comprises:
combining descriptor terms with file-specific information;
wherein, when said application (175) reads said manifest file (150), said descriptor terms indicate to said application (175) which of said files are said one or more data files (143-146, 149) and which of said files are said one or more print files (148, 161-163).

4. A method of creating an archived file (150) in a manner that allows an application (175) to distinguish between one or more data files (143-146, 149), to be burned onto an optical disc (100), and one or more print files (148, 161-163), comprising content to be printed, in said archived file (150) comprising:
using an enforced directory structure in said archived file (150);
wherein said enforced directory structure indicates to said application (175) a file location associated with said one or more data files (143-146, 149) and a file location associated with said one or more print files (148, 161-163).

5. The method of claim 4, further comprising:
extracting files from said archived file (150) with said application (175), said files including said one or more data files (143-146, 149) and said one or more print files (148, 161-163);
burning said one or more data files (143-146, 149) onto an optical disc (100); and
printing content corresponding to said one or more print files (148, 161-163).

6. A system (170) for burning one or more data files (143-146, 149) onto an optical disc (100) and for printing content corresponding to said optical disc (100) using one or more print files (148, 161-163) comprising:
a processor (171);
a storage unit (174); and
an optical disc drive (173);
wherein said processor (171) is configured to execute an application (175) resident on said storage unit (174) to extract files comprising said one or more data files (143-146, 149), said one or more print files (148, 161-163), and a manifest file (130) from an archived file (150);
said application (175) using said manifest file (130) to distinguish said one or more data files (143-146), 149), to be burned onto an optical disc (100), from said one or more print files (148, 161-163), comprising content to be printed.

7. The system (170) of claim 6, wherein said system (170) is configured to download said archived file (150) before said processor (171) executes said application (175).

8. A system (170) for burning one or more data files (143-146, 149) onto an optical disc (100) and for printing content corresponding to said optical disc (100) using one or more print files (148, 161-163) comprising:
a processor (171);
a storage unit (174); and
an optical disc drive (173);
wherein, processor (171) executes an application resident on said storage unit (174) to extract files comprising said one or more data files (143-146, 149), to be burned onto said optical disc (100), and said one or more print files (148, 161-163), comprising content to be printed, from an archived file (150), said application distinguishing said one or more data files (143-146, 149) from said one or more print files (148, 161-163) based on an enforced directory structure in said archived file (150).

9. A processor (171) readable medium having instructions thereon for:
generating an archived file (150);
generating a manifest file (130); and
including said manifest file (130) in said archived file (150);
wherein said manifest file (130) indicates to an application (175) a file location within said archived file (150) associated with one or more data files (143-146, 149), to be burned onto an optical disc (100), and a file location associated with one or more print files (148, 161-163), comprising content to be printed, enabling said application (175) to distinguish said one or more data files (143-146, 149) from said one or more print files (148, 161-163).

10. A processor (171) readable medium having instructions thereon for:
extracting files from an archived file (150) with an application (175), said files including one or more data files (143-146, 149), one or more print files (148, 161-163), and a manifest file (130);
distinguishing, with said application (175), said one or more data files (14-3-146, 149) from said one or more print files (148, 161-163)
(1.00); and burning said one or more data files (143-146, 149) onto an optical disc
printing content corresponding to said one or more print files (148, 161-163);
wherein said manifest file (130) indicates to said application (175) a file location within said archived file (150) associated with said one or more data files (143-146, 149) and a file location associated with said one or more print files (148, 161-163).

## Patentansprüche

1. Ein Verfahren zum Erzeugen einer archivierten Datei (150) auf eine Weise, die ermöglicht, dass eine Anwendung (175) zwischen einer oder mehreren Datendateien (143 - 146, 149), die auf eine optische Scheibe (100) gebrannt werden sollen, und einer oder mehreren Druckdateien (148, 161 - 163), die einen Inhalt aufweisen, der gedruckt werden soll, in der archivierten Datei (150) unterscheiden kann, mit folgenden Schritten:
Erzeugen einer Manifestierungsdatei (130); und
Einschließen der Manifestierungsdatei (150) in die archivierte Datei (150);
wobei die Manifestierungsdatei (130) der Anwendung (175) innerhalb der archivierten Datei (150) eine Dateiposition, die der einen oder den mehreren Datendateien (143 - 146, 149) zugeordnet ist, und eine Dateiposition angibt, die der einen oder den mehreren Druckdateien (148, 161 - 163) zugeordnet ist.

2. Das Verfahren gemäß Anspruch 1, das ferner folgende Schritte aufweist:
Extrahieren von Dateien aus der archivierten Datei (150) mit der Anwendung (175), wobei die Dateien die eine oder die mehreren Datendateien (143 - 146, 149), die eine oder die mehreren Druckdateien (148, 161 - 163) und die Manifestierungsdatei (150) umfassen;
Brennen der einen oder mehreren Datendateien (143 - 146, 149) auf eine optische Scheibe (100); und
Drucken eines Inhalts, der der einen oder den mehreren Druckdateien (148, 161 - 163) entspricht.

3. Das Verfahren gemäß Anspruch 2, bei dem die Erzeugung der Manifestierungsdatei (150) folgenden Schritt aufweist:
Kombinieren von Deskriptorausdrücken mit dateispezifischen Informationen;
wobei, wenn die Anwendung (175) die Manifestierungsdatei (150) liest, die Diskriptorausdrücke der Anwendung (175) angeben, welche der Dateien die eine oder die mehreren Datendateien (143 - 146, 149) sind und welche der Dateien die eine oder die mehreren Druckdateien (148, 161 - 163) sind.

4. Ein Verfahren zum Erzeugen einer archivierten Datei (150) auf eine Weise, die ermöglicht, dass eine Anwendung (175) zwischen einer oder mehreren Datendateien (143 - 146, 149), die auf eine optische Scheibe (100) gebrannt werden sollen, und einer oder mehreren Druckdateien (148, 161 - 163), die einen Inhalt aufweisen, der gedruckt werden soll, in der archivierten Datei (150) unterscheiden kann, mit folgenden Schritten:
Verwenden einer Zwangsverzeichnisstruktur bei der archivierten Datei (150);
wobei die Zwangsverzeichnisstruktur der Anwendung (175) eine Dateiposition, die der einen oder den mehreren Datendateien (143 - 146, 149) zugeordnet ist, und eine Dateiposition angibt, die der einen oder den mehreren Druckdateien (148, 161 - 163) zugeordnet ist.

5. Das Verfahren gemäß Anspruch 4, das ferner folgende Schritte aufweist:
Extrahieren von Dateien aus der archivierten Datei (150) mit der Anwendung (175), wobei die Dateien die eine oder die mehreren Datendateien (143 - 146, 149), die eine oder die mehreren Druckdateien (148, 161 - 163) und die Manifestierungsdatei (150) umfassen;
Brennen der einen oder mehreren Datendateien (143 - 146, 149) auf eine optische Scheibe (100); und
Drucken eines Inhalts, der der einen oder den mehreren Druckdateien (148, 161 - 163) entspricht.

6. Ein System (170) zum Brennen einer oder mehrerer Datendateien (143 - 146, 149) auf eine optische Scheibe (100) und zum Drucken eines Inhalts, der der optischen Scheibe (100) entspricht, unter Verwendung einer oder mehrerer Druckdateien (148, 161 - 163), das folgende Merkmale aufweist:
einen Prozessor (171);
eine Speichereinheit (174); und
ein Optikscheibenlaufwerk (173);
wobei der Prozessor (171) konfiguriert ist, um eine Anwendung (175), die auf der Speichereinheit (174) resident ist, auszuführen, um Dateien, die eine oder mehrere Datendateien (143 - 146, 149), die eine oder die mehreren Druckdateien (148, 161 - 163) und eine Manifestierungsdatei (130) aufweisen, aus einer archivierten Datei (150) zu extrahieren;
wobei die Anwendung (175) die Manifestierungsdatei (130) verwendet, um die eine oder die mehreren Datendateien (143 - 146, 149), die auf eine optische Scheibe (100) gebrannt werden sollen, von der einen oder den mehreren Druckdateien (148, 161 - 163), die einen Inhalt aufweisen, der gedruckt werden soll, zu unterscheiden.

7. Das System (170) gemäß Anspruch 6, wobei das System (170) konfiguriert ist, um die archivierte Datei (150) herunterzuladen, bevor der Prozessor (171) die Anwendung (175) ausführt.

8. Ein System (170) zum Brennen einer oder mehrerer Datendateien (143 - 146, 149) auf eine optische Scheibe (100) und zum Drucken eines Inhalts, der der optischen Scheibe (100) entspricht, unter Verwendung einer oder mehrerer Druckdateien (148, 161 - 163), das folgende Merkmale aufweist:
einen Prozessor (171);
eine Speichereinheit (174); und
ein Optikscheibenlaufwerk (173);
wobei der Prozessor (171) eine Anwendung, die auf der Speichereinheit (174) resident ist, ausführt, um Dateien, die die eine oder die mehreren Datendateien (143 - 146, 149), die auf eine optische Scheibe (100) gebrannt werden sollen, und die eine oder die mehreren Druckdateien (148, 161 - 163) aufweisen, die einen Inhalt aufweisen, der gedruckt werden soll, aus einer archivierten Datei (150) zu extrahieren, wobei die Anwendung die eine oder die mehreren Datendateien (143 - 146, 149) von der einen oder den mehreren Druckdateien (148, 161 - 163) basierend auf einer Zwangsverzeichnisstruktur in der archivierten Datei (150) unterscheidet.

9. Ein durch einen Prozessor (171) lesbares Medium, auf dem sich Anweisungen befinden zum:
Erzeugen einer archivierten Datei (150);
Erzeugen einer Manifestierungsdatei (130); und
Einschließen der Manifestierungsdatei (130) in die archivierte Datei (150);
wobei die Manifestierungsdatei (130) einer Anwendung (175) innerhalb der archivierten Datei (150) eine Dateiposition, die einer oder mehreren Datendateien (143 - 146, 149) zugeordnet ist, die auf eine optische Scheibe (100) gebrannt werden sollen, und eine Dateiposition angibt, die einer oder mehreren Druckdateien (148, 161 - 163) zugeordnet ist, die einen Inhalt aufweisen, der gedruckt werden soll, wobei ermöglicht ist, dass die Anwendung (175) die eine oder die mehreren Datendateien (143 - 146, 149) von der einen oder den mehreren Druckdateien (148, 161 - 163) unterscheiden kann.

10. Ein durch einen Prozessor (171) lesbares Medium, auf dem sich Anweisungen befinden zum:
Extrahieren von Dateien aus einer archivierten Datei (150) mit einer Anwendung (175), wobei die Dateien eine oder mehrere Datendateien (143 - 146, 149), eine oder mehrere Druckdateien (148, 161 - 163) und eine Manifestierungsdatei (130) umfassen;
Unterscheiden der einen oder der mehreren Datendateien (143 - 146, 149) von der einen oder den mehreren Druckdateien (148, 161 - 163) mit der Anwendung (175);
Brennen der einen oder der mehreren Datendateien (143 - 146, 149) auf eine optische Scheibe (100);
Drucken eines Inhalts, der der einen oder den mehreren Druckdateien (148, 161 - 163) entspricht;
wobei die Manifestierungsdatei (130) der Anwendung (175) innerhalb der archivierten Datei (150) eine Dateiposition, die der einen oder den mehreren Datendateien (143 - 146, 149) zugeordnet ist, und eine Dateiposition angibt, die der einen oder den mehreren Druckdateien (148, 161 - 163) zugeordnet ist.

## Revendications

1. Procédé de création d'un fichier archivé (150) d'une manière qui permet à une application (175) de faire la distinction entre un ou plusieurs fichier(s) de données (143-146, 149), à graver sur un disque optique (100), et un ou plusieurs fichiers d'impression (148, 161-163), comprenant un contenu à imprimer, au sein dudit fichier archivé (150) comprenant
◆ la génération d'un fichier manifeste (130) ; et
◆ l'intégration dudit fichier manifeste (130) dans ledit fichier archivé (150) ;
dans lequel ledit fichier manifeste (130) indique à ladite application (175) un emplacement de fichier au sein dudit fichier archivé (150) associé audit ou auxdits fichier(s) de données (143-146, 149) et un emplacement de fichier associé audit ou auxdits fichier(s) d'impression (148, 161-163).

2. Procédé selon la revendication 1, comprenant en outre :
◆ l'extraction de fichiers dudit fichier archivé (150) avec ladite application (175), lesdits fichiers comprenant ledit ou lesdits fichier(s) de données (143-146, 149), ledit ou lesdits fichier(s) d'impression (148, 161-163), et ledit fichier manifeste (150) ;
◆ la gravure dudit ou desdits fichier (s) de données (143-146, 149) sur un disque optique (100); et
◆ l'impression du contenu correspondant audit ou auxdits fichier(s) de données (148, 161-163).

3. Procédé selon la revendication 2, dans lequel ladite génération dudit fichier manifeste (150) comprend:
la combinaison de termes de description avec des informations spécifiques aux fichiers ;
dans lequel, lorsque ladite application (175) lit ledit fichier manifeste (150), lesdits termes de description indiquent à ladite application (175) lesquels desdits fichiers sont ledit ou lesdits fichier (s) de données (143-146, 149) et lesquels desdits fichiers sont ledit ou lesdits fichier(s) d'impression (148, 161-163).

4. Procédé de création d'un fichier archivé (150) d'une manière qui permet à une application (175) de faire la distinction entre un ou plusieurs fichier(s) de données (143-146, 149), à graver sur un disque optique (100), et un ou plusieurs fichier(s) d'impression (148, 161-163), comprenant un contenu à imprimer, au sein dudit fichier archivé (150), comprenant :
l'utilisation d'une structure de répertoire dans ledit fichier archivé (150) ;
dans lequel ladite structure de répertoire indique à ladite application (175) un emplacement de fichier associé audit ou auxdits fichier (s) de données (143-146, 149) et un emplacement de fichier associé audit ou auxdits fichier(s) d'impression (148, 161-163).

5. Procédé selon la revendication 4, comprenant en outre :
◆ l'extraction de fichiers à partir dudit fichier archivé (150) avec ladite application (175), lesdits fichiers comprenant ledit ou lesdits fichier(s) de données (143-146, 149) et ledit ou lesdits fichier(s) d'impression (148, 161-163) ;
◆ la gravure dudit ou desdits fichier(s) de données (143-146, 149) sur un disque optique (100) ; et
◆ l'impression du contenu correspondant audit ou auxdits fichier(s) d'impression (148, 161-163).

6. Système (170) permettant de graver un ou plusieurs fichier(s) de données (143-146, 149) sur un disque optique (100) et d'imprimer le contenu correspondant audit disque optique (100) en utilisant un ou plusieurs fichier(s) d'impression (148, 161-163), comprenant :
◆ un processeur (171) ;
◆ une unité de stockage (174) ; et
◆ un lecteur de disque optique (173) ;
dans lequel ledit processeur (171) est configuré afin d'exécuter une application (175) résidant sur ladite unité de stockage (174) de façon à extraire des fichiers comprenant ledit ou lesdits fichier(s) de données (143-146, 149), ledit ou lesdits fichier(s) d'impression (148, 161-163), et un fichier manifeste (130) à partir d'un fichier archivé (150) ;
ladite application (175) utilisant ledit fichier manifeste (130) afin de faire la distinction entre ledit ou lesdits fichier(s) de données (143-146, 149), à graver sur un disque optique (100), et un ou plusieurs fichier(s) d'impression (148, 161-163), comprenant un contenu à imprimer.

7. Système (170) selon la revendication 6, dans lequel ledit système (170) est configuré afin de télécharger ledit fichier archivé (150) avant que ledit processeur (171) n'exécute ladite application (175).

8. Système (170) de gravure d'un ou plusieurs fichier(s) de données (143-146, 149) sur un disque optique (100) et d'impression d'un contenu correspondant audit disque optique (100) en utilisant un ou plusieurs fichier(s) d'impression (148, 161-163), comprenant :
◆ un processeur (171) ;
◆ une unité de stockage (174) ; et
◆ un lecteur de disque optique (173) ;
dans lequel le processeur (171) exécute une application résidant sur ladite unité de stockage (174) afin d'extraire des fichiers comprenant ledit ou lesdits fichier(s) de données (143-146, 143), à graver sur ledit disque optique (100), et ledit ou lesdits fichier(s) d'impression (148, 161-163), comprenant un contenu à imprimer, à partir d'un fichier archivé (150), ladite application faisant la distinction entre ledit ou lesdits fichier(s) de données (143-146, 149) et ledit ou lesdits fichier(s) d'impression (148, 161-163) sur la base d'une structure de répertoire au sein dudit fichier archivé (150).

9. Support lisible par un processeur (171) ayant des instructions dessus permettant de :
◆ générer un fichier archivé (150);
◆ générer un fichier manifeste (130) ; et
◆ intégrer ledit fichier manifeste (130) audit fichier archivé (150) ;
dans lequel ledit fichier manifeste (130) indique à une application (175) un emplacement de fichier au sein dudit fichier archivé (150) associé à un ou plusieurs fichier(s) de données (143-146, 149), à graver sur un disque optique (100), et un emplacement de fichier associé à un ou plusieurs fichier(s) d'impression (148, 161-163), comprenant un contenu à imprimer, permettant à ladite application (175) de faire la distinction entre ledit ou lesdits fichier(s) de données (143-146, 149) et ledit ou lesdits fichier(s) d'impression (148, 161-163).

10. Support lisible par un processeur (171) ayant des instructions dessus permettant de:
◆ extraire des fichiers d'un fichier archivé (150) avec une application (175), lesdits fichiers comprenant un ou plusieurs fichier(3) de données (143-146, 149), un ou plusieurs fichier(s) d'impression (148, 161-163), et un fichier manifeste (130) ;
◆ faire la distinction, avec ladite application (175), entre ledit ou lesdits fichier(s) de données (143-146, 149) et ledit ou lesdits fichier (s) d'impression (148, 161-163) ;
◆ graver ledit ou lesdits fichier(s) de données (143-146, 149) sur un disque optique (100) ; et
◆ imprimer le contenu correspondant audit ou aux-dits fichier(s) d'impression (148, 161-163) ;
dans lequel ledit fichier manifeste (130) indique à ladite application (175) un emplacement de fichier au sein dudit fichier archivé (150) associé audit ou auxdits fichier(s) de données (143-146, 149) et un emplacement de fichier associé audit ou auxdits fichier(s) d'impression (148, 161-163).
